# EUROPÄISCHE PATENTSCHRIFT

(11) **EP 3 617 562 B1**
(45) Veröffentlichungstag und Bekanntmachung des Hinweises auf die Patenterteilung: **22.09.2021**
(21) Anmeldenummer: 19180433.5
(22) Anmeldetag: 17.06.2019
(51) Int. Cl.: F16H 61/4174, B66F 9/065, B66F 9/22

(54) **VERLADEFAHRZEUGSTRUKTUR**
LOADING VEHICLE STRUCTURE
STRUCTURE DE VEHICULE DE CHARGEMENT

(30) Priorität: 31.08.2018 DE 102018121287
(43) Veröffentlichungstag der Anmeldung: 04.03.2020
(73) Patentinhaber: CLAAS Material Handling GmbH, 33428 Harsewinkel (DE)
(72) Erfinder: Dückingaus, Heinrich, 33649 Bielefeld (DE); Ostfechtel, Christian, 33442 Herzebrock-Clarholz (DE); Wiefel, Markus, 48361 Beelen (DE)
(74) Vertreter: CLAAS Gruppe

(56) Entgegenhaltungen:
- EP-A1- 3 073 157
- DE-A1-102011 009 044
- DE-A1-102013 101 869
- US-A1- 2014 083 290

## Beschreibung

Die Erfindung betrifft ein Hydraulisches System mit einer Vorrichtung zur Entlüftung einer Hydraulikflüssigkeit nach dem Oberbegriff des Anspruchs 1 und eine Verwendung eines solchen Systems in Verladefahrzeugen mit zumindest einem längenveränderlichen Hubarm nach dem Oberbegriff des Anspruchs 10.

Derartige Ladefahrzeuge sind unter anderem aus der EP 2 686 265 bekannt geworden. Das als sogenannter Teleskoplader ausgeführte Ladefahrzeug umfasst eine als teleskopierbarer Tragarm ausgebildete Ladeeinrichtung, die zwischen einer bodennahen unteren Arbeitsposition und einer Vielzahl von bodenfernen oberen Arbeitspositionen bewegbar ist. Die als Teleskoparm ausgebildete Ladeeinrichtung ist einenends um eine sich quer zur Fahrrichtung des Teleskopladers erstreckende Schwenkachse mittels zumindest eines Hubzylinders verschwenkbar. Zugleich kann das vordere Segment des teleskopierbaren Tragarms unabhängig von der Schwenkbewegung oder gekoppelt an diese aus- und eingefahren werden. Frontseitig nimmt der Tragarm ein im dargestellten Ausführungsbeispiel als Ladegabel ausgeführtes Ladewerkzeug auf. Das Ladewerkzeug ist in der Regel schwenkbeweglich an dem teleskopierbaren Tragarm angelenkt. Bezüglich der Anlenkung des teleskopierbaren Tragarms am Ladefahrzeug sind gemäß GB 2161784 auch Lösungen bekannt, die zudem ein Rotieren des Teleskoparms um eine vertikale Drehachse ermöglichen.

Die in derartigen Ladefahrzeugen, wie im Übrigen auch in Traktoren und sonstigen mobilen Arbeitsmaschinen eingesetzten Hydrauliksysteme umfassen - neben anderen Komponenten - mindestens eine Hydraulikpumpe, einen Sumpf oder ein Hydraulikreservoir/-tank, hydraulische Funktionen, wie beispielsweise Aktuatoren oder Zylinder, und Ventileinrichtungen bzw. Steuerventile, welche die Kommunikation zwischen der Hydraulikpumpe, dem Sumpf und der hydraulischen Funktion steuern. Hydraulikreservoirs oder Tanks werden verwendet, um Öl oder Hydraulikflüssigkeit zu speichern und der Hydraulikflüssigkeit Zeit zum Entschäumen, Entlüften bzw. Entgasen zu geben. Wenn die Flüssigkeit nicht in ausreichender Weise entlüftet wird, ist die Hydraulikpumpe anfällig für Kavitationsschäden und Ausfälle. Mit Luft oder Gas versetzte Hydraulikflüssigkeit in einem Hydrauliksystem kann Geräusche verursachen, eine sprunghafte Wirkungsweise der hydraulischen Funktion bewirken, Wärmebildung verursachen und eine verringerte Lebensdauer der Komponenten zur Folge haben. So kann es beispielsweise in einigen Hydrauliksystemen von Traktoren oder Ladefahrzeugen vorkommen, dass Hydraulikflüssigkeit zumindest teilweise zerstäubt wird, wenn sie mit einer übermäßigen Geschwindigkeit aus einem Steuerventilauslass ausfließt, wenn die Hydraulikflüssigkeit zurück zum Sumpf fließt bzw. mit dem Sumpf in kommunizierender Verbindung steht. Dies bewirkt, dass die Hydraulikflüssigkeit in dem Sumpf mit Luft vermischt oder aufgeschäumt wird.

Üblicher Weise sind die Hydrauliksysteme der Fahrantriebe mobiler Arbeitsmaschinen zudem vollständig mit Hydraulikflüssigkeit gefüllt, sodass auf diese Weise der bekannten Schaumbildung entgegengewirkt wird. Zur Verbesserung des Wirkungsgrades derartiger Hydrauliksysteme sollen die Gehäuse der Hydrostatik-Komponenten nicht mit Hydrauliköl gefüllt sein, damit das den Wirkungsgrad verschlechternde sogenannte Planschen verhindert wird.

Um diese Probleme zu vermeiden, wird u.a. in der EP 3 073 157 vorgeschlagen, der Hydraulikmotoranordnung eine Absaugeinrichtung zur Absaugung der Hydraulikflüssigkeit in der Weise zuzuordnen, dass die Absaugeinrichtung mittels Unterdruck Hydraulikflüssigkeit aus der Hydraulikmotoranordnung in den Hydraulikflüssigkeitsspeicher abführt, sodass auch bei schnelllaufenden Hydraulikmotoranordnungen eine zufriedenstellende Ölentlüftung erreicht wird. Die in EP 3 073 157 beschriebene Lösung hat jedoch den Nachteil, dass sie konstruktiv aufwendig und damit kostenintensiv ist und zudem einen erhöhten Bauraumbedarf aufweist.

Es ist deshalb Aufgabe der Erfindung, die beschriebenen Nachteile des Standes der Technik zu vermeiden und insbesondere ein wirkungsvolles, eine einfache Struktur aufweisendes Ölentlüftungssystem zu schaffen.

Diese Aufgabe wird erfindungsgemäß durch die kennzeichnenden Merkmale der Ansprüche 1 und 10 gelöst.
Indem ein hydraulisches System mit einer Vorrichtung zur Entlüftung einer Hydraulikflüssigkeit, welches eine Hydraulikmotoranordnung und einen mit dieser Hydraulikmotoranordnung hydraulisch gekoppelten Hydraulikflüssigkeitsspeicher umfasst und der zumindest einen Hydraulikmotoranordnung eine Absaugeinrichtung zur Absaugung der Hydraulikflüssigkeit in der Weise zugeordnet ist, dass die Absaugeinrichtung mittels Unterdruck (Δp) Hydraulikflüssigkeit aus der Hydraulikmotoranordnung in den Hydraulikflüssigkeitsspeicher abführt. so beschaffen ist, dass die Absaugeinrichtung als Strahlpumpe ausgeführt und in die Rücklaufleitung zwischen Hydraulikmotoranordnung und Hydraulikflüssigkeitsspeicher integriert ist und die Strahlpumpe zumindest eine Treibdüse, eine Mischkammer sowie einen Diffusor umfasst, wobei dass die Treibdüse durchlaufende Treibmedium aus dem unter Druck stehenden Abschnitt des hydraulischen Systems abgezweigt wird, die Mischkammer mit der Rücklaufleitung der Hydraulikmotoranordnung und der Diffusor mit der Rücklaufleitung zum Hydraulikflüssigkeitsspeicher verbunden sind, wird sichergestellt, dass eine wirkungsvolle, eine einfache Struktur aufweisendes Ölabsaugung erreicht wird, die zudem eine bauraumsparende, effizient arbeitende Ölabsaugung erreicht.

In einer vorteilhaften Weiterbildung der Erfindung wird das die Treibdüse durchlaufende Treibmedium aus dem vorgespannten Ausspülöl der Hydraulikmotoranordnung abgezweigt, sodass zusätzliche Elemente zum Aufbau des Drucks im Treibmedium entbehrlich sind.

Indem die Absaugung der Hydraulikflüssigkeit mittels Strahlpumpe unabhängig von der Drehrichtung der Hydraulikmotoranordnung und damit unabhängig von der Fahrtrichtung eines die Hydraulikmotoranordnung umfassenden Ladefahrzeugs oder einer sonstigen, insbesondere landwirtschaftlichen Arbeitsmaschine ist, wird sichergestellt, dass eine an beliebige Fahrsituationen angepasste Ölabsaugung möglich wird.

Eine effiziente und bauraumsparende Entmischung von Luftblasen und Hydraulikflüssigkeit wird in einer vorteilhaften Weiterbildung der Erfindung dann erreicht, wenn die Absaugleitung mit einem in den Hydraulikflüssigkeitsspeicher integrierten Auslassrohr gekoppelt ist und wobei das Auslassrohr in dem Hydraulikflüssigkeitsspeicher in vertikaler Richtung geneigt angeordnet ist. Diese Effekte werden dann noch verstärkt, wenn das Auslassrohr Öffnungen zum Durchtritt der Hydraulikflüssigkeit und obenseitig eine Luftaustrittsöffnung aufweist.

Die erfindungsgemäße Absaugeinrichtung ist in einer vorteilhaften Ausgestaltung zudem so beschaffen, dass sie flexibel auch zur Absaugung von Hydrauliköl aus Doppelmotoranordnungen eingesetzt werden kann.

Eine konstruktiv einfache Ausgestaltung ergibt sich auch dann, wenn die Hydraulikmotoranordnung über eine Luftansaugleitung mit dem Hydraulikflüssigkeitsspeicher verbunden ist.

Die Realisierung des erfindungsgemäßen Unterdrucks lässt sich auf konstruktive einfache Weise dadurch realisieren, dass die Luftansaugleitung ein Rückschlagventil umfasst, dessen Durchlass in Abhängigkeit von einem definierten Unterdruck in der Hydraulikmotoranordnung freigegeben wird. In einer bevorzugten Ausgestaltung steht das Rückschlagventil unter Federvorspannung, die einen Öffnungsdruck von bis zu 1 bar, vorzugsweise 0,5 bar oder 0,6 bar erfordert. In diesem Unterdruckbereich verbinden sich in der Hydraulikflüssigkeit enthaltene Bläschen geringer Größe sehr effektiv zu größeren Luftblasen, die sich schließlich effizienter und einfacher aus der Hydraulikflüssigkeit abscheiden lassen.

Die Einsatzmöglichkeiten der erfindungsgemäßen Ölabsaugung wird auch dadurch noch erhöht, wenn das Ladefahrzeug oder die sonstige, insbesondere landwirtschaftliche Arbeitsmaschine einen Lüfter und einem diesen zugeordneten Lüfterantrieb umfasst und das dem Lüfterantrieb eine Strahlpumpe zugeordnet ist, die aus dem Lüfterhydraulikkreis einen Teilstrom abzweigt und diesen einem Kühler zuführt, sodass neben der Ölentlüftung auch eine effizientere Kühlung des Hydraulikmediums bewirkt wird. In diesem Zusammenhang ist es unter dem Gesichtspunkt einer einfachen konstruktiven Umsetzung von Vorteil, wenn das dem Ladefahrzeug oder der sonstigen, insbesondere landwirtschaftlichen Arbeitsmaschine zugeordnete hydraulische System eine Vielzahl von Strahlpumpen umfasst und jede der Strahlpumpen ihr Treibmedium aus der vorgespannten Hydraulikflüssigkeit des Lüfterantriebs bezieht.

In einer weiteren vorteilhaften Ausgestaltung ist vorgesehen, dass jeder Strahlpumpe eine Blende zugeordnet ist und die Blende so klein beschaffen ist, dass auch bei niedriger Drehzahl des Antriebsmotors des Ladefahrzeugs oder der sonstigen, insbesondere landwirtschaftlichen Arbeitsmaschine ein ausreichend hoher Druck des Treibmediums 50 sichergestellt ist.

Ein breites Anwendungsspektrum ergibt sich dann, wenn die erfindungsgemäße Absaugvorrichtung in als Teleskoplader, Gabelstapler oder Radlader ausgebildeten Ladefahrzeugen oder sonstigen landwirtschaftlichen Arbeitsmaschinen wie etwa Mähdrescher, Feldhäcksler oder Traktoren eingesetzt wird.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: das erfindungsgemäße Ladefahrzeug in Seitenansicht
- Figur 2: das Ladefahrzeug nach Figur 1 in Ansicht von unten
- Figur 3: eine schematische Darstellung der erfindungsgemäßen Absaugeinrichtung
- Figur 4: eine weitere Ausführungsform der erfindungsgemäßen Absaugeinrichtung

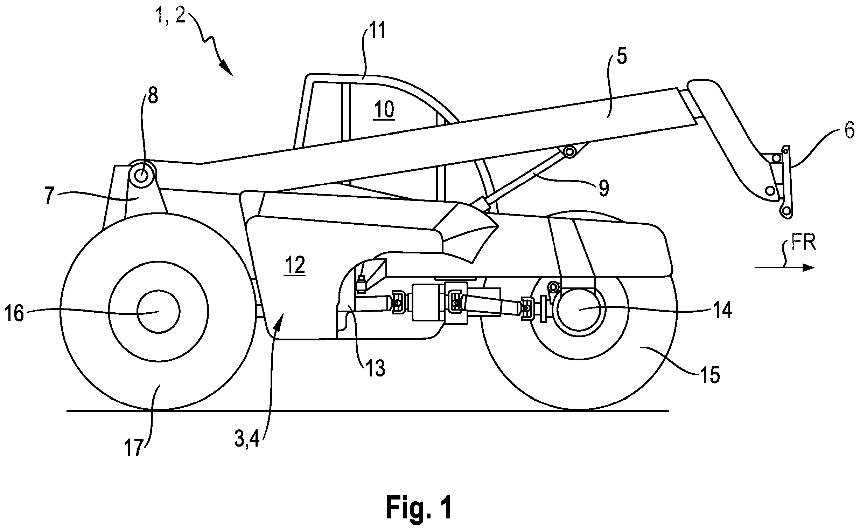

Figur 1 zeigt schematisch ein als Teleskoplader 2 ausgeführtes Ladefahrzeug 1. In an sich bekannter Weise nimmt die als Tragrahmen 3 ausgeführte Tragstruktur 4 in zentraler Position einen teleskopierbaren Hubarm 5 auf, dem frontseitig ein an sich bekannter Werkzeugadapter 6 zugeordnet ist. Der Hubarm 5 wird in seinem rückwärtigen Bereich von zumindest einer in Stützflanschen 7 quer zur Fahrtrichtung FR angeordneten Schwenkachse 8 schwenkbeweglich gelagert und wobei zur Realisierung der Schwenkbewegung dem Hubarm 5 untenseitig ein oder mehrere Hubzylinder 9 zugeordnet sind, die durch Druckbeaufschlagung oder Druckentlastung das Verschwenken des Hubarms 5 um die besagte Schwenkachse 8 ermöglichen. Das teleskopartige Ein- und Ausfahren des Hubarms 5 wird in an sich bekannter und deshalb nicht näher dargestellter Weise mittels weitere Hubzylinder realisiert. Der teleskopierbare Hubarm 5 unterteilt aufgrund seiner zentralen Anordnung das Ladefahrzeug 1 in einen kabinenseitigen Bereich 10 in dem die Fahrerkabine 11 dem Tragrahmen 3 zugeordnet ist und einen antriebsseitigen Bereich 12 in dem der Antriebsmotor 13 von dem Tragrahmen 3 aufgenommen wird. Zudem nimmt der Tragrahmen 3 in an sich bekannter Weise ein von einer Vorderachse 14 gebildetes Frontfahrwerk 15 und ein von einer Hinterachse 16 gebildetes Heckfahrwerk 17 auf.

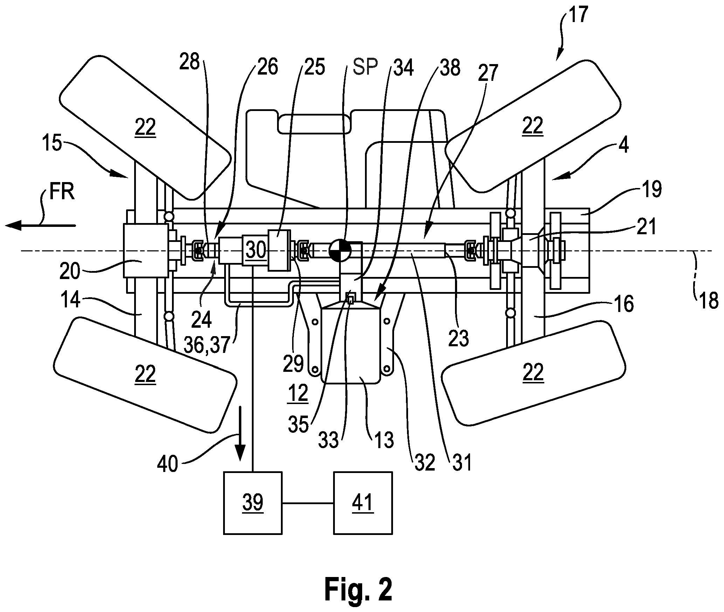

Gemäß Figur 2 umfasst die Tragstruktur 4 einen sich in Längsrichtung 18 des Ladefahrzeugs 1 erstreckenden Längsträger 19 an dem das Frontfahrwerk 15 und das Heckfahrwerk 17 befestigt sind. In dem dargestellten Ausführungsbeispiel nimmt sowohl die Vorderachse 14 als auch die Hinterachse 16 jeweils ein sogenanntes Differentialgetriebe 20, 21, welches entweder entsperrbar oder starr ausgeführt ist, zum Antrieb der Laufräder 22 auf. Jedes der Differentialgetriebe 20, 21 ist über mechanische Teilantriebsstränge 23, 24 mit einem Zentralgetriebe 25 gekoppelt. Die Teilantriebsstränge 23, 24 können im einfachsten Fall als an sich bekannte Gelenkwellen 26, 27 ausgeführt sein. Es liegt im Rahmen der Erfindung, dass die Teilantriebsstränge 23, 24 auch hydraulische Komponenten zur Übertragung der Antriebsenergie umfassen können. Das Zentralgetriebe 25 verfügt im dargestellten Ausführungsbeispiel über zwei in Fahrzeuglängsrichtung 18 weisende Abtriebswellen, 28, 29 die mit der jeweiligen Gelenkwelle 26, 27 antriebsverbunden sind.

Das Zentralgetriebe 25 ist mit einer noch näher zu beschreibenden Hydraulikmotoranordnung 30 zum Antrieb des Zentralgetriebes 25 verbunden. In an sich bekannter und deshalb nicht dargestellter Weise wird die Hydraulikmotoranordnung 30 über Schraubverbindungen an das Zentralgetriebe 25 angeflanscht. Zur optimalen Ausnutzung vorhandener Freiräume an dem Ladefahrzeug 1 ist das Zentralgetriebe 25 in dem kabinenseitigen Bereich 10 wenigstens teilweise unterhalb der Fahrerkabine 11 und nahe der Vorderachse 14 an der Tragstruktur 4 fixiert. Zur Reduzierung der Verschmutzung und zur Vermeidung von Bodenkontakt werden der Antriebsstrang 31 sowie das Zentralgetriebe 25 wenigstens teilweise von dem Längsträger 19 des Tragrahmens 3 gekapselt. Es liegt im Rahmen der Erfindung, dass der Antriebsstrang 31 und das Zentralgetriebe 25 auch vollständig von dem Längsträger 19 ummantelt sein können. In diesem Fall tritt nahezu kein verschmutzungs- und kollisionsbedingte Verschleiß auf.

In erfindungsgemäßer Weise nimmt die Tragstruktur 4 zudem den Antriebsmotor 13 auf, der im dargestellten Ausführungsbeispiel über einen Stützrahmen 32 an dem Längsträger 19 des Tragrahmens 3 abgestützt wird. Der Antriebsmotor 13 nimmt eine nahezu mittige Position zwischen den Fahrwerken 15, 17 des Teleskopladers 2 ein. Zugleich ist er in Längsrichtung 18 des Teleskopladers 2 versetzt zum Zentralgetriebe 25 in dem antriebsseitigen Bereich 12 des Teleskopladers 2 angeordnet. Auf diese Weise sind das Zentralgetriebe 25 und der Antriebsmotor 13 dem Antriebsstrang 31 der Fahrwerke 15, 17 wechselseitig zugeordnet. Dies hat insbesondere den Vorteil, dass die Antriebsaggregate 25, 13 nahe am Längsträger 19 des Tragrahmens 3 angeordnet werden können, sodass sich eine nahezu zentrale Lage des Schwerpunktes SP zwischen den Fahrwerken 15, 17 und damit eine große Fahrstabilität ergibt. Die Einbaulage des Antriebsmotors 13 erstreckt sich quer zur Längsrichtung 18 des Teleskopladers 2, sodass dessen Abtriebswelle 33 in Richtung des Antriebsstranges 31 der Fahrwerke 15,17 weist. Die Abtriebswelle 33 des Antriebsmotors 13 nimmt in erfindungsgemäßer Weise eine Hydraulikpumpenanordnung 34 auf, die einfachstenfalls mittels Schraubverbindungen am Antriebsmotor 13 angeflanscht ist und über die Abtriebswelle 33 und einen der Hydraulikpumpenanordnung 34 zugeordneten Antriebsstutzen 35 von dem Antriebsmotor 13 angetrieben wird. Die Hydraulikpumpenanordnung 34 des Antriebsmotors 13 und die Hydraulikmotoranordnung 30 des Zentralgetriebes 25 sind über ein Leitungssystem 36 zur Übertragung des Hydraulikmediums miteinander verbunden. Zur Erreichung einer hohen Flexibilität bei der Anordnung der verschiedenen Antriebsaggregate 13, 25, 30, 34 besteht das Leitungssystem 36 in vorteilhafter Weise aus Schlauchleitungen 37. Zur Erreichung einer niedrigen Lage des Schwerpunktes SP ist es von Vorteil, wenn die Antriebsaggregate 13, 25, 30, 34 unterhalb des Längsträgers 19 angeordnet sind. Indem die von dem Antriebsmotor 13 und der zugeordneten Hydraulikpumpe 34 gebildete Antriebseinheit 38 so in dem antriebsseitigen Bereich 12 angeordnet ist, dass sich die Antriebseinheit 38 zumindest teilweise in den Bereich des Antriebsstranges 31 der Fahrwerke 15, 17 erstreckt, wird eine kompakte Ausführung der gesamten Antriebsstruktur des Verladefahrzeugs ermöglicht. Der mit dem Zentralgetriebe 25 gekoppelten Hydraulikmotoranordnung 30 ist zudem die erfindungsgemäße Absaugeinrichtung 39 zugeordnet, die in noch näher zu beschreibender Weise mittels Unterdruck Hydraulikflüssigkeit 40 aus der Hydraulikmotoranordnung 30 in einen Hydraulikflüssigkeitsspeicher 41 abführt.

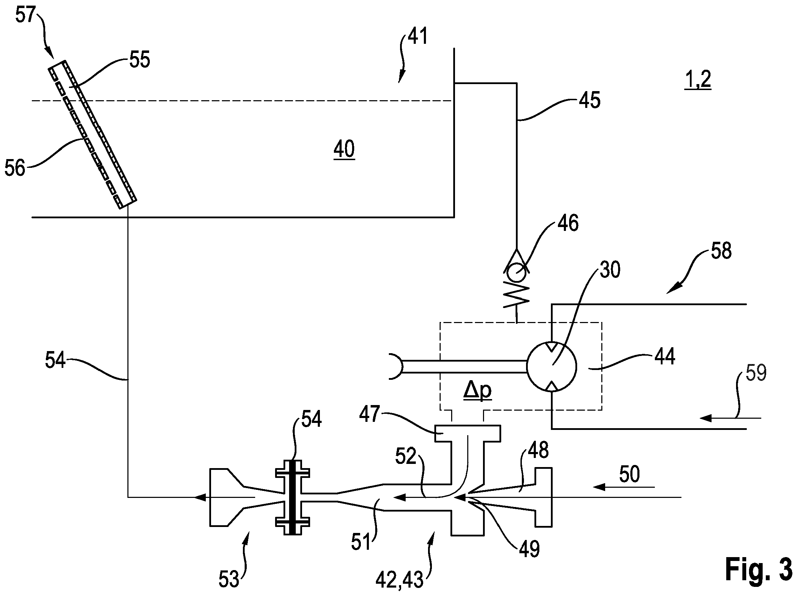

Figur 3 zeigt nun die erfindungsgemäß als Strahlpumpe 42 ausgeführte Absaugeinrichtung 43 im Detail. Die Hydraulikmotoranordnung 30, hier beispielhaft als Einmotoranordnung ausgeführt, ist in ein Gehäuse 44 integriert. Über eine Luftansaugleitung 45 ist das Gehäuse 44 mit dem Hydraulikflüssigkeitsspeicher 41 verbunden, wobei der Hydraulikflüssigkeitsspeicher 41 nur teilwiese mit Hydraulikflüssigkeit 40 gefüllt ist. Anderenends mündet die Luftansaugleitung 45 in ein dem Gehäuse 44 der Hydraulikmotoranordnung 30 zugeordnetes Rückschlagventil 46, dessen Durchlass in Abhängigkeit von einem definierten Unterdruck im Gehäuse 44 freigegeben wird. Das Rückschlagventil 46 steht unter Federvorspannung und realisiert einen Öffnungsdruck von bis zu 1 bar, vorzugsweise 0,5 bar oder 0,6 bar.

Erfindungsgemäß wird die Absaugeinrichtung 43 zur Generierung des Unterdrucks Δp im Gehäuse 44 von einer Strahlpumpe 42 gebildet. Die Strahlpumpe 42 umfasst einen Absauganschluss 47, der unmittelbar an das Gehäuse 44 angeflanscht ist. An einer Seite des Absauganschlusses 47 ist dieser von einer sogenannten Treibdüse 48 durchsetzt, wobei sich im Übergangsbereich zwischen Treibdüse 48 und der Wandung des Absauganschlusses 47 eine als Blende 49 ausgebildete Verengung ergibt. Am freien Ende der Treibdüse 48 wird dieser das Treibmedium 50, in der Regel unter Druck stehendes Hydrauliköl, zugeführt. Der Treibdüse 48 gegenüberliegend ist dem Absauganschluss 47 eine Mischkammer 51 angeformt, in der das Treibmedium 50 auf das Mittels Unterdruck Δp abzusaugende Hydrauliköl 52 trifft. Durch die hohe Geschwindigkeit, mit der das Treibmedium 50 durch die Blende 49 der Treibdüse 48 gepresst wird einsteht nach dem Venturi-Prinzip im Bereich der Mischkammer 51 eine Saugwirkung auf das den Absauganschluss 47 durchströmende Hydrauliköl 52. Diese Saugwirkung führt schließlich zu dem erfindungsgemäßen Unterdruck Δp. Das freie Ende der Mischkammer 51 ist mit einem über eine Flanschverbindung 54 lös- und austauschbaren Diffusor 53 verbunden. Es liegt im Rahmen der Erfindung, dass der Diffusor 53 auch unmittelbar an die Mischkammer 51 angeformt sein kann. Am Ende des Diffusors 53 tritt das Gemisch aus abgesaugtem Hydrauliköl 52 und Treibmedium 50 aus der Strahlpumpe 42 aus und wird über eine Rücklaufleitung 54 zum Hydraulikflüssigkeitsspeicher 41 zurückgeführt. Die in den Hydraulikflüssigkeitsspeicher 41 mündende Rücklaufleitung 54 ist an ihrem speicherseitigen Ende mit einem Auslassrohr 55 gekoppelt, welches in dem Hydraulikflüssigkeitsspeicher 41 in vertikaler Richtung geneigt angeordnet ist. Das Auslassrohr 55 verfügt über Öffnungen 56 durch die die abgesaugte Hydraulikflüssigkeit in den Hydraulikflüssigkeitsspeicher 41 austreten kann. Obenseitig verfügt das Auslassrohr 55 über eine weiter Öffnung 57 durch die die in dem Öl gebundenen Luftblasen abgeschieden werden können. Indem das Gehäuse 44 der Hydraulikmotoranordnung 30 im Betrieb des als Teleskoplader 2 ausgeführten Ladefahrzeugs 1 permanent unter Unterdruck Δp steht wird sichergestellt, dass sich die in der aufgeschäumten Hydraulikflüssigkeit 52 eingeschlossenen Luftbläschen zu größeren Luftblasen verbinden, bevor diese sich dann beim Durchlaufen des Auslassrohres 55 einfacher von der Hydraulikflüssigkeit 50, 52 trennen und abscheiden lassen. Dieser Entlüftungseffekt ist besonders bei schnelllaufenden Hydraulikmotoranordnungen von besonderer Bedeutung, da diese verstärkt zur Blasenbildung neigen.

Dass die Treibdüse durchlaufende, aus dem unter Druck stehenden Abschnitt des hydraulischen Systems 58 abgezweigte Treibmedium 50 kann in einer bevorzugten Ausgestaltung aus dem vorgespannten Ausspülöl 59 der Hydraulikmotoranordnung 30 abgezweigt werden. Zudem ist die Absaugung der Hydraulikflüssigkeit 52 mittels Strahlpumpe 42 unabhängig von der Drehrichtung der Hydraulikmotoranordnung 30 und damit unabhängig von der Fahrtrichtung FR eines die Hydraulikmotoranordnung 30 umfassenden Ladefahrzeugs.

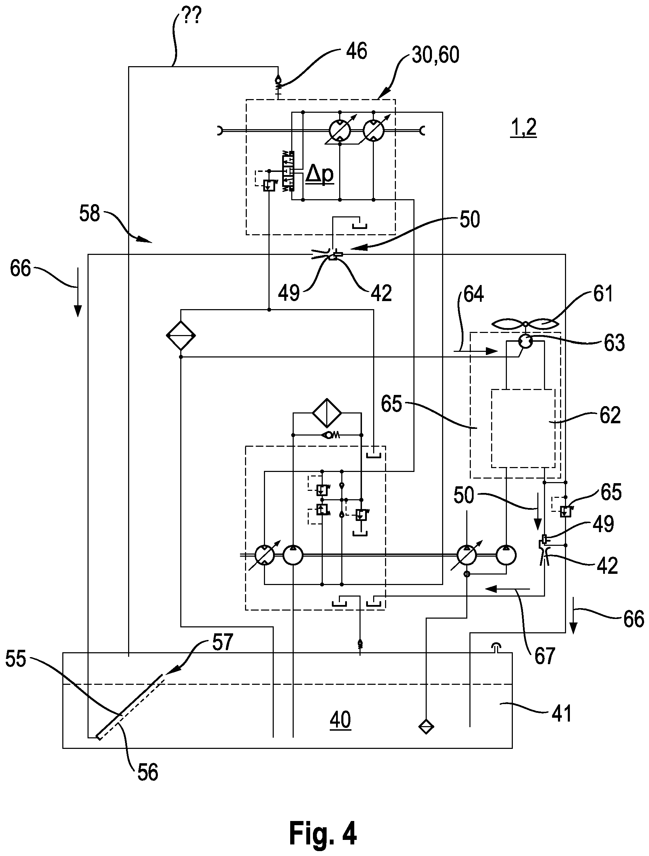

Figur 4 zeigt schließlich weitere vorteilhafte Ausgestaltungen der Erfindung. Zunächst kann die Hydraulikmotoranordnung 30 als Doppelmotoranordnung 60 ausgebildet sein, wobei die erfindungsgemäße Strahlpumpe 42 dann in der bereits beschriebenen Weise der Doppelmotoranordnung 60 zugeordnet ist.

Als Teleskoplader 2 ausgeführte Ladefahrzeuge 1 werden in der Regel von Verbrennungsmotoren angetrieben, die eine erhebliche Wärmentwicklung verursachen. Zudem führen die dem hydraulischen System 58 zugeordneten Hydraulikelemente im Betrieb zu einer erheblichen Erhitzung der Hydraulikflüssigkeit 40. Zum Abbau dieser verschiedenen Wärmeentwicklungen ist dem Ladefahrzeug 1 ein Lüfter 61 und diesem eine Lüfterhydraulikkreis 62 zugeordnet, die im Zusammenwirken einen Kühlluftstrom erzeugen, der in einem an sich bekannten und daher nicht dargestellten Kühler eine Kühlung der Hydraulikflüssigkeit 40 und des einen Verbrennungsmotor kühlenden Kühlwassers bewirken. Der Lüfter 61 wird in der Regel hydraulisch angetrieben, wobei der ihm zugeordnete Hydraulikmotor 63 in Abhängigkeit von der Drehzahl des Verbrennungsmotors mit Hydraulikflüssigkeit 64 versorgt wird. Damit unabhängig von der Drehzahl des Verbrennungsmotors stets ausreichend Hydraulikmedium zur Verfügung steht wird die dem Hydraulikmotor 63 des Lüfters 61 zugeführte Hydraulikflüssigkeit 64 mittels Druckbegrenzungsventil 65 vorgespannt. Zur Reduzierung der Öltemperatur ist nun in einer vorteilhaften Weiterbildung der Erfindung vorgesehen, dass dem Lüfterantrieb 65 eine weitere erfindungsgemäße Strahlpumpe 42 zugeordnet ist, die in der bereits beschriebenen Weise mittels Venturi-Effekt aus dem zum Hydraulikflüssigkeitsspeicher 41 zurückfließenden Hydrauliköls 66 einen Teilstrom 67 absaugt und diesen dem Kühler zuführt. Eine einfache konstruktive Gestaltung ergibt sich dann, wenn alle in das hydraulische System 58 integrierten Strahlpumpen 42 ihr Treibmedium 50 aus der durch das beschriebene Druckbegrenzungsventil 65 vorgespannten Hydraulikflüssigkeit 64 beziehen. Zudem ist die Blende 49 jeder Strahlpumpe 42 so klein beschaffen, dass auch bei niedriger Drehzahl des Antriebsmotors des Ladefahrzeugs ein ausreichend hoher Druck des Treibmediums 50 sichergestellt ist.

Zudem liegt es im Rahmen der Erfindung, dass das Ladefahrzeug auch als Radlader oder sonstige landwirtschaftliche Arbeitsmaschine, insbesondere Feldhäcksler, Mähdrescher oder Traktor ausgeführt sein kann.

**Bezugszeichenliste:**

| | | | |
|---|---|---|---|
| 1 | Ladefahrzeug | 33 | Abtriebswelle |
| 2 | Teleskoplader | 34 | Hydraulikpumpe |
| 3 | Tragrahmen | 35 | Antriebsstutzen |
| 4 | Tragstruktur | 36 | Leitungssystem |
| 5 | Hubarm | 37 | Schlauchleitungen |
| 6 | Werkzeugadapter | 38 | Antriebseinheit |
| 7 | Stützflansch | 39 | Absaugeinrichtung |
| 8 | Schwenkachse | 40 | Hydraulikflüssigkeit |
| 9 | Hubzylinder | 41 | Hydraulikflüssigkeitsspeicher |
| 10 | kabinenseitiger Bereich | 42 | Strahlpumpe |
| 11 | Fahrerkabine | 43 | Absaugeinrichtung |
| 12 | antriebsseitiger Bereich | 44 | Gehäuse |
| 13 | Antriebsmotor | 45 | Luftansaugleitung |
| 14 | Vorderachse | 46 | Rückschlagventil |
| 15 | Frontfahrwerk | 47 | Absaufanschluss |
| 16 | Hinterachse | 48 | Treibdüse |
| 17 | Heckfahrwerk | 49 | Blende |
| 18 | Längsrichtung | 50 | Treibmedium |
| 19 | Längsträger | 51 | Mischkammer |
| 20 | Differentialgetriebe | 52 | Hydraulikflüssigkeit |
| 21 | Differentialgetriebe | 53 | Diffusor |
| 22 | Laufräder | 54 | Rücklaufleitung |
| 23 | Teilantriebsstrang | 55 | Auslassrohr |
| 24 | Teilantriebsstrang | 56 | Öffnung |
| 25 | Zentralgetriebe | 57 | Öffnung |
| 26 | Gelenkwelle | 58 | hydraulisches System |
| 27 | Gelenkwelle | 59 | Ausspülöl |
| 28 | Abtriebswelle | 60 | Doppelmotor |
| 29 | Abtriebswelle | 61 | Lüfter |
| 30 | Hydraulikmotoranordnung | 62 | Lüfterhydraulikkreis |
| 31 | Antriebsstrang | 63 | Hydraulikmotor |
| 32 | Stützrahmen | 64 | Hydraulikflüssigkeit |
| 65 | | Lüfterantrieb | |
| 66 | | Hydrauliköl | |
| 67 | | Teilstrom | |

## Patentansprüche

1. Hydraulisches System mit einer Vorrichtung zur Entlüftung einer Hydraulikflüssigkeit, wobei das hydraulische System zumindest eine Hydraulikmotoranordnung und einen mit dieser Hydraulikmotoranordnung hydraulisch gekoppelten Hydraulikflüssigkeitsspeicher umfasst und der zumindest einen Hydraulikmotoranordnung eine Absaugeinrichtung zur Absaugung der Hydraulikflüssigkeit in der Weise zugeordnet ist, dass die Absaugeinrichtung mittels Unterdruck (Δp) Hydraulikflüssigkeit aus der Hydraulikmotoranordnung in den Hydraulikflüssigkeitsspeicher abführt,
**dadurch gekennzeichnet,**
**dass** die Absaugeinrichtung (39) als Strahlpumpe (42) ausgeführt ist und in die Rücklaufleitung (54) zwischen Hydraulikmotoranordnung (30) und Hydraulikflüssigkeitsspeicher (41) integriert ist, wobei die Strahlpumpe (42) zumindest eine Treibdüse (48), eine Mischkammer (51) sowie einen Diffusor (53) umfasst, wobei das die Treibdüse (48) durchlaufende Treibmedium (50) aus dem unter Druck stehenden Abschnitt des hydraulischen Systems (58) abgezweigt wird, die Mischkammer (51) mit der Rücklaufleitung der Hydraulikmotoranordnung (30) und der Diffusor (53) mit der Rücklaufleitung (54) zum Hydraulikflüssigkeitsspeicher (41) verbunden sind.

2. Hydraulisches System nach Anspruch 1,
**dadurch gekennzeichnet,**
**dass** das die Treibdüse (48) durchlaufende Treibmedium (50) aus dem vorgespannten Ausspülöl (59) der Hydraulikmotoranordnung (30) abgezweigt wird.

3. Hydraulisches System nach einem der Ansprüche 1 oder 2,
**dadurch gekennzeichnet,**
**dass** die Absaugung der Hydraulikflüssigkeit (52) mittels Strahlpumpe (42) unabhängig von der Drehrichtung der Hydraulikmotoranordnung (30) ist.

4. Hydraulisches System nach einem der Ansprüche 1 bis 3,
**dadurch gekennzeichnet,**
**dass** die Rücklaufleitung (54) mit einem in den Hydraulikflüssigkeitsspeicher (41) integrierten Auslassrohr (55) gekoppelt ist und wobei das Auslassrohr (55) in dem Hydraulikflüssigkeitsspeicher (41) in vertikaler Richtung geneigt angeordnet ist.

5. Hydraulisches System nach einem der vorhergehenden Ansprüche,
**dadurch gekennzeichnet,**
**dass** die Hydraulikmotoranordnung (30) als Doppelmotoranordnung (60) ausgebildet ist.

6. Hydraulisches System nach einem der vorhergehenden Ansprüche,
**dadurch gekennzeichnet,**
**dass** die Hydraulikmotoranordnung (30, 60) über eine Luftansaugleitung (45) mit dem Hydraulikflüssigkeitsspeicher (41) verbunden ist

7. Hydraulisches System nach einem der vorhergehenden Ansprüche,
**dadurch gekennzeichnet,**
**dass** die Luftansaugleitung (45) ein Rückschlagventil (46) umfasst, dessen Durchlass in Abhängigkeit von einem definierten Unterdruck (Δp) in der Hydraulikmotoranordnung (30, 60) freigegeben wird, wobei vorzugsweise das Rückschlagventil (46) unter Federvorspannung steht und einen Öffnungsdruck von bis zu 1 bar, vorzugsweise 0,5 bar oder 0,6 bar erfordert.

8. Hydraulisches System nach Anspruch 4,
**dadurch gekennzeichnet,**
**dass** das Auslassrohr (55) Öffnungen (56) zum Durchtritt der Hydraulikflüssigkeit (50, 52, 66) und obenseitig eine Luftaustrittsöffnung (57) aufweist.

9. Hydraulisches System nach Anspruch 8,
**dadurch gekennzeichnet, dass**, bei Verwendung in einem Ladefahrzeug oder in einer sonstigen Arbeitsmaschine mit Antriebsmotor, jeder Strahlpumpe (42) eine Blende (49) zugeordnet ist und die Blende (49) so klein beschaffen ist, dass auch bei niedriger Drehzahl des Antriebsmotors (13) des Ladefahrzeugs (1) oder der sonstigen, insbesondere landwirtschaftlichen Arbeitsmaschine ein ausreichend hoher Druck des Treibmediums (50) sichergestellt ist.

10. Verwendung der Vorrichtung zur Entlüftung einer Hydraulikflüssigkeit eines hydraulischen Systems nach Anspruch 1 in einem Ladefahrzeug (1), zumindest umfassend einen längenveränderlichen Hubarm (5) und wobei der Hubarm (5) in einer Tragstruktur (4) über zumindest einen Hubzylinder (9) schwenkbeweglich abgestützt wird und die Tragstruktur (4) über wenigstens ein Frontfahrwerk (15) und zumindest ein Heckfahrwerk (17) verfügt und wobei das Frontfahrwerk (15) und das Heckfahrwerk (17) über einen Antriebsstrang (31) miteinander gekoppelt sind und die Tragstruktur (4) weiterhin zumindest einen Antriebsmotor (13) und wenigstens ein Zentralgetriebe (25) aufnimmt.

11. Verwendung der Vorrichtung zur Entlüftung einer Hydraulikflüssigkeit eines hydraulischen Systems nach Anspruch 10,
**dadurch gekennzeichnet,**
**dass** die Absaugung der Hydraulikflüssigkeit (52) mittels Strahlpumpe (42) unabhängig von der Drehrichtung der Hydraulikmotoranordnung (30) ist, und damit unabhängig von der Fahrtrichtung (FR) eines die Hydraulikmotoranordnung (30) umfassenden Ladefahrzeugs (1) oder einer sonstigen, insbesondere landwirtschaftlichen Arbeitsmaschine ist.

12. Verwendung der Vorrichtung zur Entlüftung einer Hydraulikflüssigkeit eines hydraulischen Systems nach einem der Ansprüche 10 oder 11,
**dadurch gekennzeichnet,**
**dass** das Ladefahrzeug (1) oder die sonstige, insbesondere landwirtschaftliche Arbeitsmaschine einen Lüfter (61) und einem diesen zugeordneten Lüfterantrieb (65) umfasst und das dem Lüfterantrieb (65) eine Strahlpumpe (42) zugeordnet ist, die aus dem Lüfterhydraulikkreis (62) einen Teilstrom abzweigt und diesen einem Kühler zuführt.

13. Verwendung der Vorrichtung zur Entlüftung einer Hydraulikflüssigkeit eines hydraulischen Systems nach Anspruch 12,
**dadurch gekennzeichnet,**
**dass** das dem Ladefahrzeug (1) oder der sonstigen, insbesondere landwirtschaftliche Arbeitsmaschine zugeordnete hydraulische System (58) eine Vielzahl von Strahlpumpen (42) umfasst und jede der Strahlpumpen (42) ihr Treibmedium (50) aus der vorgespannten Hydraulikflüssigkeit des Lüfterantriebs (65) bezieht.

14. Verwendung der Vorrichtung zur Entlüftung einer Hydraulikflüssigkeit nach einem der Ansprüche 10 bis 13,
**dadurch gekennzeichnet,**
**dass** das Ladefahrzeug (1) als Teleskoplader (2), Gabelstapler oder Radlader ausgebildet ist.

15. Verwendung der Vorrichtung zur Entlüftung einer Hydraulikflüssigkeit eines hydraulischen Systems nach einem der vorhergehenden Ansprüche,
**dadurch gekennzeichnet,**
**dass** die Arbeitsmaschine als landwirtschaftliche Arbeitsmaschine, insbesondere Traktor, Mähdrescher oder Feldhäcksler ausgeführt ist.

## Claims

1. A hydraulic system with a device for degassing a hydraulic fluid, wherein the hydraulic system comprises at least one hydraulic motor assembly and a hydraulic fluid tank which is hydraulically coupled to said hydraulic motor assembly, and a suction device for extraction of the hydraulic fluid is associated with the at least one hydraulic motor assembly in a manner such that the suction device discharges hydraulic fluid from the hydraulic motor assembly into the hydraulic fluid tank by means of vacuum pressure (Δp),
**characterized in that**
the suction device (39) is configured as a jet pump (42) and is integrated into the return line (54) between the hydraulic motor assembly (30) and the hydraulic fluid tank (41), wherein the jet pump (42) comprises at least one motive nozzle (48), a mixing chamber (51) as well as a diffuser (53), wherein the motive medium (50) passing through the motive nozzle (48) is branched off from the pressurized portion of the hydraulic system (58), the mixing chamber (51) is connected to the return line of the hydraulic motor assembly (30) and the diffuser (53) is connected to the return line (54) of the hydraulic fluid tank (41).

2. The hydraulic system according to claim 1,
**characterized in that**
the motive medium (50) passing through the motive nozzle (48) is branched off from the pre-pressurised scavenging oil (59) of the hydraulic motor assembly (30).

3. The hydraulic system according to claim 1 or claim 2,
**characterized in that**
the hydraulic fluid (52) is sucked out independently of the rotational direction of the hydraulic motor assembly (30) by means of the jet pump (42).

4. The hydraulic system according to one of claims 1 to 3,
**characterized in that**
the return line (54) is coupled to an outlet tube (55) which is integrated into the hydraulic fluid tank (41), and wherein the outlet tube (55) is disposed in the hydraulic fluid tank (41) so as to be inclined to the vertical direction.

5. The hydraulic system according to one of the preceding claims,
**characterized in that**
the hydraulic motor assembly (30) is configured as a dual motor assembly (60).

6. The hydraulic system according to one of the preceding claims,
**characterized in that**
the hydraulic motor assembly (30, 60) is connected to the hydraulic fluid tank (41) via an air intake line (45).

7. The hydraulic system according to one of the preceding claims,
**characterized in that**
the air intake line (45) comprises a non-return valve (46) which is configured so that the free passage is opened as a function of a defined vacuum pressure (Δp) in the hydraulic motor assembly (30, 60), wherein preferably, the non-return valve (46) is springloaded and requires an opening pressure of up to 1 bar, preferably 0.5 bar or 0.6 bar.

8. The hydraulic system according to claim 4,
**characterized in that**
the outlet tube (55) has apertures (56) for the passage of the hydraulic fluid (50, 52, 66) and an air outlet aperture (57) at the top.

9. The hydraulic system according to claim 8,
**characterized in that**
when in use in a loading vehicle or in another working machine with a drive motor,
a diaphragm (49) is associated with each jet pump (42) and the diaphragm (49) is small enough to guarantee a sufficiently high pressure of the motive medium (50) even at a low rotational speed of the drive motor (13) of the loading vehicle (1) or of another, in particular agricultural working machine.

10. Use of the device for degassing a hydraulic fluid of a hydraulic system according to claim 1 in a loading vehicle (1) comprising at least an adjustable length lifting arm (5) and wherein the lifting arm (5) is pivotably supported in a carrying structure (4) via at least one lifting cylinder (9), and the carrying structure (4) has at least one front chassis (15) and at least one rear chassis (17), and wherein the front chassis (15) and the rear chassis (17) are coupled to one another via a drive train (31), and furthermore, the carrying structure (4) supports at least one drive motor (13) and at least one central transmission (25).

11. Use of the device for degassing a hydraulic fluid of a hydraulic system according to claim 10,
**characterized in that**
extraction of the hydraulic fluid (52) by means of the jet pump (42) is independent of the direction of rotation of the hydraulic motor assembly (30), and therefore independent of the direction of travel (FR) of a loading vehicle (1) or another, in particular agricultural working machine comprising the hydraulic motor assembly (30).

12. Use of the device for degassing a hydraulic fluid of a hydraulic system according to claim 10 or claim 11,
**characterized in that**
the loading vehicle (1) or the other, in particular agricultural working machine comprises a fan (61) and a fan drive (65) associated therewith, and **in that** a jet pump (42) is associated with the fan drive (65), the jet pump being configured to branch off a sub stream from the hydraulic circuit (62) of the fan and to supply it to a cooling device.

13. Use of the device for degassing a hydraulic fluid of a hydraulic system according to claim 12,
**characterized in that**
the hydraulic system (58) associated with the loading vehicle (1) or the other, in particular agricultural working machine comprises a plurality of jet pumps (42) and each of the jet pumps (42) draws its motive medium (50) from the pre-pressurised hydraulic fluid of the fan drive (65).

14. Use of the device for degassing a hydraulic fluid of a hydraulic system according to one of claims 10 to 13,
**characterized in that**
the loading vehicle (1) is constructed as telescoping loader (2), forklift or wheel loader.

15. Use of the device for degassing a hydraulic fluid of a hydraulic system according to one of the preceding claims,
**characterized in that**
the working machine is in the form of an agricultural working machine, in particular a tractor, combine harvester or forage harvester.

## Revendications

1. Système hydraulique comprenant un dispositif pour la purge d'air d'un liquide hydraulique, le système hydraulique incluant au moins un agencement de moteur hydraulique et un réservoir de liquide hydraulique couplé hydrauliquement à cet agencement de moteur hydraulique, et au au moins un agencement de moteur hydraulique étant associé un équipement d'aspiration pour aspirer le liquide hydraulique de façon que l'équipement d'aspiration chasse du liquide hydraulique hors de l'agencement de moteur hydraulique vers le réservoir de liquide hydraulique au moyen d'une pression négative (Δp), **caractérisé en ce que** l'équipement d'aspiration (39) est conformé en pompe à jet (42) et est intégré dans la conduite de retour (54) entre l'agencement de moteur hydraulique (30) et le réservoir de liquide hydraulique (41), la pompe à jet (42) incluant au moins une buse de propulsion (48), une chambre de mélange (51) ainsi qu'un diffuseur (53), l'agent de propulsion (50) qui traverse la buse de propulsion (48) étant séparé de la portion du système hydraulique (58) placée sous pression, la chambre de mélange (51) étant reliée à la conduite de retour de l'agencement de moteur hydraulique (30) et le diffuseur (53) étant relié à la conduite de retour (54) vers le réservoir de liquide hydraulique (41).

2. Système hydraulique selon la revendication 1, **caractérisé en ce que** l'agent de propulsion (50) traversant la buse de propulsion (48) est séparé de l'huile de balayage (59) de l'agencement de moteur hydraulique (30).

3. Système hydraulique selon une des revendications 1 ou 2, **caractérisé en ce que** l'aspiration du liquide hydraulique (52) au moyen de la pompe à jet (42) est indépendante du sens de rotation de l'agencement de moteur hydraulique (30).

4. Système hydraulique selon une des revendications 1 à 3, **caractérisé en ce que** la conduite de retour (54) est couplée avec un tuyau de sortie (55) intégré dans le réservoir de liquide hydraulique (41), et le tuyau de sortie (55) étant disposé incliné dans la direction verticale dans le réservoir de liquide hydraulique (41).

5. Système hydraulique selon une des revendications précédentes, **caractérisé en ce que** l'agencement de moteur hydraulique (30) est conformé en agencement de double moteur (60).

6. Système hydraulique selon une des revendications précédentes, **caractérisé en ce que** l'agencement de moteur hydraulique (30, 60) est relié au réservoir de liquide hydraulique (41) par l'intermédiaire d'une conduite d'aspiration d'air (45) .

7. Système hydraulique selon une des revendications précédentes, **caractérisé en ce que** la conduite d'aspiration d'air (45) inclut une valve anti-retour (46) dont le passage est libéré en fonction d'une pression négative définie (Δp) dans l'agencement de moteur hydraulique (30, 60), de préférence la valve anti-retour (46) étant soumise à une précontrainte élastique et exigeant une pression d'ouverture de jusqu'à 1 bar, de préférence de 0,5 bar ou 0,6 bar.

8. Système hydraulique selon la revendication 4, **caractérisé en ce que** le tuyau de sortie (55) comporte des ouvertures (56) pour le passage du liquide hydraulique (50, 52, 66) et, en haut, une ouverture de sortie d'air (57).

9. Système hydraulique selon la revendication 8, **caractérisé en ce qu'**en cas d'utilisation dans un véhicule de chargement ou dans une autre machine de travail avec moteur d'entraînement, un étrangleur (49) est associé à chaque pompe à jet (42) et l'étrangleur (49) est conçu si petit que même à faible régime du moteur d'entraînement (13) du véhicule de chargement (1) ou de l'autre machine de travail, en particulier agricole, une pression suffisamment élevée de l'agent de propulsion (50) est garantie.

10. Utilisation du dispositif pour la purge d'air d'un liquide hydraulique d'un système hydraulique selon la revendication 1 dans un véhicule de chargement (1), au moins incluant un bras de levage à longueur variable (5), et le bras de levage (5) prenant appui avec une possibilité de pivotement dans une structure porteuse (4) par l'intermédiaire d'au moins un vérin de levage (9), et la structure porteuse (4) disposant d'au moins un train de roulement avant (15) et d'au moins un train de roulement arrière (17), et le train de roulement avant (15) et le train de roulement arrière (17) étant couplés entre eux par l'intermédiaire d'une chaîne de transmission (31), et la structure porteuse (4) recevant en outre au moins un moteur d'entraînement (13) et au moins une transmission centrale (25).

11. Utilisation du dispositif pour la purge d'air d'un liquide hydraulique d'un système hydraulique selon la revendication 10, **caractérisée en ce que** l'aspiration du liquide hydraulique (52) au moyen d'une pompe à jet (42) est indépendante du sens de rotation de l'agencement de moteur hydraulique (30) et donc indépendante du sens de la marche (FR) d'un véhicule de chargement (1) incluant l'agencement de moteur hydraulique (30) ou d'une autre machine de travail, en particulier agricole.

12. Utilisation du dispositif pour la purge d'air d'un liquide hydraulique d'un système hydraulique selon une des revendications 10 ou 11, **caractérisée en ce que** le véhicule de chargement (1) ou l'autre machine de travail, en particulier agricole, inclut un ventilateur (61) et un entraînement de ventilateur (65) associé à celuici, et **en ce qu'**à l'entraînement de ventilateur (65) est associée une pompe à jet (42) qui sépare un flux partiel du circuit hydraulique de ventilateur (62) et le dirige vers un radiateur.

13. Utilisation du dispositif pour la purge d'air d'un liquide hydraulique d'un système hydraulique selon la revendication 12, **caractérisée en ce que** le système hydraulique (58) associé au véhicule de chargement (1) ou à l'autre machine de travail, en particulier agricole, inclut une pluralité de pompes à jet (42) et chacune des pompes à jet (42) tire son agent de propulsion (50) du liquide hydraulique précontraint de l'entraînement de ventilateur (65).

14. Utilisation du dispositif pour la purge d'air d'un liquide hydraulique selon une des revendications 10 à 13, **caractérisée en ce que** le véhicule de chargement (1) est conformé en chargeur télescopique (2), en chariot élévateur à fourche ou en chargeur à pneus.

15. Utilisation du dispositif pour la purge d'air d'un liquide hydraulique d'un système hydraulique selon une des revendications précédentes, **caractérisée en ce que** la machine de travail est conformée en machine de travail agricole, en particulier en tracteur, en moissonneuse-batteuse ou en ensileuse.
